Europäisches Patentamt

European Patent Office

Office européen des brevets

(11) Veröffentlichungsnummer: **0 158 031**
**B1**

(12) # EUROPÄISCHE PATENTSCHRIFT

(45) Veröffentlichungstag der Patentschrift:
20.11.86

(51) Int. Cl.⁴: **B 29 C 45/80,** G 05 B 19/405

(21) Anmeldenummer: **85101391.2**

(22) Anmeldetag: **09.02.85**

(54) **Vorrichtung zum Schutz der Formen einer Spritzgiessmaschine zum Spritzgiessen von Kunststoffen während der Schliessung der Formen.**

(30) Priorität: **05.03.84 AT 732/84**

(43) Veröffentlichungstag der Anmeldung:
**16.10.85 Patentblatt 85/42**

(45) Bekanntmachung des Hinweises auf die Patenterteilung:
**20.11.86 Patentblatt 86/47**

(84) Benannte Vertragsstaaten:
**CH DE FR IT LI NL SE**

(56) Entgegenhaltungen:
**DE - B - 2 543 088**
**GB - A - 1 587 288**

(73) Patentinhaber: **Ludwig Engel KG,**
**Ludwig-Engel-Strasse 1, A-4311 Schwertberg (AT)**

(72) Erfinder: **Urbanek, Otto, Dr., Landstrasse 13, A-4021 Linz (AT)**
Erfinder: **Steinbichler, Georg, Dipl.-Ing.,**
**Schacherbergstrasse 2, A-4311 Schwertberg (AT)**

(74) Vertreter: **Hofinger, Engelbert et al, Torggler-Hofinger**
**Wilhelm-Greil-Strasse 16, A-6020 Innsbruck (AT)**

ACTORUM AG

# Beschreibung

Die Erfindung bezieht sich auf eine Vorrichtung zum Schutz der Formen einer Spritzgiessmaschine zum Spritzgiessen von Kunststoffen während der Schliessung der Formen, mit einem feststehenden und einem beweglichen Formhälftenträger, wobei der bewegliche Formhälftenträger mit vorgegebenem Geschwindigkeitsprofil gegen die feststehende Formhälfte bewegt wird.

Bereits vor vielen Jahren ist die Notwendigkeit erkannt worden, die teuren Spritzgussformen gegen Schäden zu schützen, die entstehen, wenn ein Fremdkörper, meistens einhängengebliebener Spritzling, zwischen die Formhälften gerät. In diesem Sinne zeigt die GB-PS 1,140,118 eine Einrichtung, bei welcher nur jener Druck, der für die Schliessbewegung der beweglichen Formspannplatte notwendig ist, auf den Fremdkörper einwirkt, wogegen der Aufbau der vollen Schliesskraft nach Schliessen der Form unterbleibt. Festgestellt wird dabei das Vorliegen eines Fremdkörpers durch Schalter grosser Ansprechgenauigkeit, die an einer der beiden Formspannplatten befestigt sind, und durch einen an der anderen Formspannplatte angebrachten einstellbaren Stift beim vollständigen Formschluss gerade noch betätigt werden. Nachteilig an dieser Methode ist, dass auch der Eilgang des Schliessteiles zur Überwindung der Reibung eine beträchtliche Kraft benötigt, die mehrere Tonnen betragen kann und damit zur Beschädigung empfindlicher Teile leicht ausreicht.

In DE-AS 1 230 552 wurde zur Verfeinerung des Formschutzes bereits vorgeschlagen, in geringem Abstand von der feststehenden Formträgerplatte federnd eine Formspannplatte anzubringen, an der zwei in den Steuerkreis des hydraulischen Antriebes eingefügte gegensätzlich schaltende Mikroschalter befestigt sind. Einer der Mikroschalter befindet sich in der Bewegungsbahn einer mit der beweglichen Formspannplatte verbundenen Schaltstange, der andere vor einer an der feststehenden Formträgerplatte befestigten Schalterstange. Der konstruktive Aufwand einer solchen Einrichtung ist relativ gross und vor allem ist es nachteilig, dass Formen verschiedener Höhe jeweils eine andere Einstellung grösster Genauigkeit erforderlich machen.

Konstruktiv aufwendig ist auch die Lösung nach DE-AS 1554791, welche eine geringfügige Beweglichkeit der „feststehenden" Formspannplatte vorsieht. Vermieden wird bei dieser Ausführung allerdings die Notwendigkeit, verschiedene Schalter entsprechend der jeweiligen Formhöhe einzustellen, was bei fehlerhafter Einstellung zu einer Vergrösserung der Fehlermöglichkeiten statt zu deren Verringerung führt.

Die Formschutzeinrichtung nach DE-AS 20 65 229 setzt gesonderte Triebwerke zum Öffnen und Schliessen der Form einerseits und zum Zuhalten derselben andererseits voraus. Schon dies bedingt einen wesentlichen Bauaufwand, der noch dadurch erhöht wird, dass bei dieser Einrichtung das Bewegungstriebwerk als gesamte Baueinheit gegen Federkraft verschiebbar ausgebildet sein muss.

In der Praxis haben sich auf Grund der geschilderten Nachteile am besten noch solche Einrichtungen durchgesetzt, bei denen eine Begrenzung des Schliessdruckes auf einen Wert angestrebt wird, bei dem es auch nicht zu Zerstörungen kommt, wenn sich irrtümlich Fremdkörper zwischen den Formhälften befinden. In diesem Sinne schlägt AT-PS 327 523 vor, im letzten Abschnitt der Schliessbewegung automatisch ein Überdruckventil zu betätigen. Problematisch daran ist vor allem die richtige Einstellung dieses Ventiles. Wenn sich nämlich temperaturbedingt oder alterungsbedingt die Maschinenteile nur schwer gegeneinander bewegen lassen, reicht die bei Öffnung des Überdruckventiles verbleibende kinetische Energie unter Umständen zur vollständigen Schliessung der Form nicht aus. Andernfalls kann die Schliessung der Form wieder zu rasch erfolgen. Tatsächlich hat sich bei Verwendung von Überdruckventilen zur Begrenzung des Schliessdruckes, die willkürlich einstellbar sind, gezeigt, dass das Bedienungspersonal dazu neigt, hohe Einstellungen zu wählen, um das Schliessen der Form immer sicherzustellen. Beschädigungen der Formen durch Fremdkörper sind die immer wieder beobachtete Folge.

Zur Vermeidung der aufgezeigten Nachteile sieht die Erfindung vor, dass die Überwachung der Schliessbewegung der Spritzgiessmaschine nicht druckabhängig, sondern bewegungsabhängig erfolgt.

Beim normalen Öffnungs- oder Schliessvorgang einer Schliesseinheit, bei dem der bewegliche Formhälftenträger Geschwindigkeitsänderungen erfährt, treten Beschleunigungen und Verzögerungen auf, die infolge der Inertialkräfte der bewegten Massen kaum Diskontinuitäten aufweisen. Wird die Bewegung der Masse des beweglichen Formhälftenträgers und der entsprechenden Werkzeughälfte behindert, beispielsweise durch einen eingeklemmten Formteil oder einen fehlerhaften Werkzeugzustand, der bei einem Schliessvorgang unter grosser Kraftausübung zu Beschädigungen führen kann, wird ein Teil der kinetischen Energie des bewegten Systems in Verformungsenergie umgewandelt. Dieser Verlust an kinetischer Energie bewirkt eine Geschwindigkeitsänderung. Die absolute Geschwindigkeitsänderung kann sehr klein sein, wesentlich ist jedoch, dass infolge der sehr schnellen Umsetzung von kinetischer Energie in Verformungsarbeit eine sehr deutliche Verzögerung die Folge ist.

Dieser physikalische Zusammenhang wird nun zur Erkennung von Schliessbehinderungen dahingehend herangezogen, dass in einem definierten Wegintervall der zeitliche Verlauf der Beschleunigung (und Verzögerung) der beim Formschliessvorgang bewegten Massen auf Veränderungen und kurzzeitig auftretende Verzögerungsspitzen überwacht wird.

Dies wird erfindungsgemäss dadurch erreicht, dass an dem beweglichen Formhälftenträger oder an der Formhälfte ein Beschleunigungsaufnehmer

montiert ist, der an einem Messumformer angeschlossen ist, der bei einer einen vorgegebenen Wert überschreitenden Verzögerung bzw. einer ei-nen vorgegebenen Wert überschreitenden Ände-rung der Verzögerung ein Steuersignal an die Steuereinrichtung des Schliesssystems der Spritzgiessmaschine abgibt und die Schliessbewegung des Schliesssystems unterbricht. Der Beschleunigungsaufnehmer kann hiebei in verschiedenen Ausführungen, wie beispielsweise als Feder-Masse-System oder auf der Basis einer piezoelektrischen Einrichtung zum Einsatz gelangen.

Vorteilhaft ist vorgesehen, dass die Steuereinheit unmittelbar nach dem Abbrechen der Schliessbewegung eine Öffnungsbewegung des Schliesssystems der Spritzgiessmaschine einleitet.

Ein Ausführungsbeispiel der Erfindung sieht vor, dass an den beweglichen Formhälftenträger ein Wegaufnehmer angeschlossen ist, und dass in den Messumformer bzw. in die Steuereinrichtung zwei Wegpositionen der Schliesseinheit eingebbar sind, die den Überwachungsbereich für die Schliessbewegung definieren.

Es ist vorteilhaft für die Überwachung, den Be-wegungsabschnitt unmittelbar vor der Schliess-stellung der Formhälften auszusuchen, da es hier zu einer stetigen Geschwindigkeitsabnahme kommt. Abgesehen davon, können Beschädigungen des Werkzeuges durch eingeklemmte Formteile nur in diesem Bereich auftreten.

Ein weiteres Ausführungsbeispiel der Erfindung sieht vor, dass die Steuereinheit über Schieber einen Schliesszylinder eines Hydrauliksystems der Spritzgiessmaschine steuert, und ein Schieber in Kombination mit einem Ventil bei dem Abbrechen der Schliessbewegung ein sofortiges Schliessen der Abflussleitung des Schliesszylinders bewirkt. Durch diese Anordnung wird eine raschere Reaktion des Schliesssystems auf die Steuersignale erreicht.

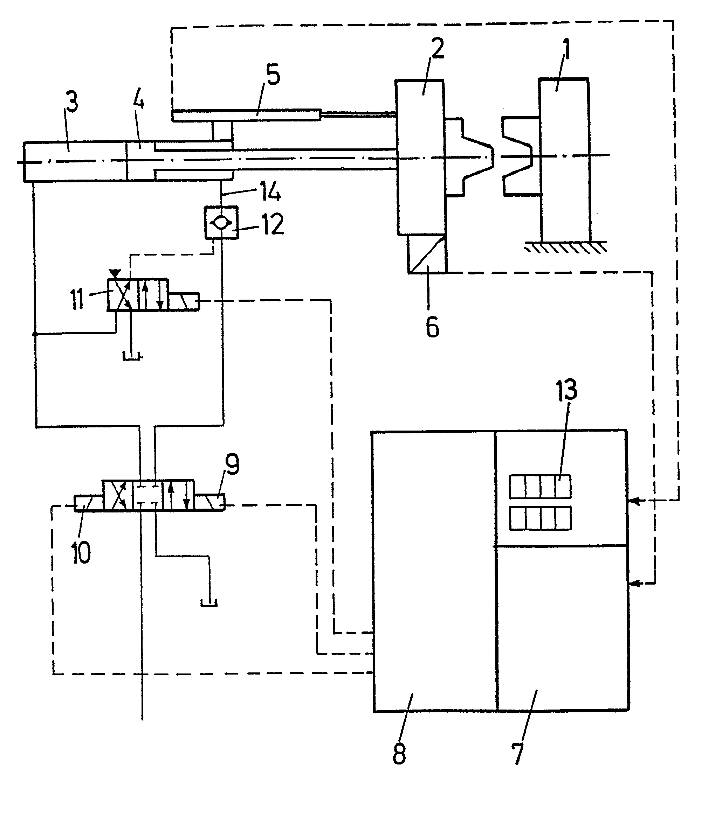

Nachfolgend wird ein Ausführungsbeispiel der Erfindung anhand der Figur der beiliegenden Zeichnung beschrieben.

Die Figur der Zeichnung zeigt schematisch die Hydraulikschliesseinrichtung einer Spritzgiess-maschine mit erfindungsgemässer Schutzvor-richtung. Ein umittelbar am beweglichen Form-hälftenträger angordneter Kniehebelmechanismus ist nicht gezeigt, da dieser so wie das eigentliche Schliesssystem der Spritzgiessmaschine nach dem bekannten Stand der Technik ausgeführt ist und nicht Gegenstand der vorliegenden Erfindung bildet.

In der Figur der Zeichnung ist der feststehende Formhälftenträger mit 1 und der bewegliche Formhälftenträger mit 2 bezeichnet. Der bewegliche Formhälftenträger 2 wird durch einen in einem Schliesszylinder 3 verfahrbaren Kolben 4 verschoben, wobei dieses Verschieben über ein Kniehebelsystem, aber auch über ein voll hydraulisches Schliesssystem ohne Kniehebel erfolgen kann.

An den beweglichen Formhälftenträger 2 ist weiters ein Wegaufnehmer 5 angeschlossen. Der Formhälftenträger 2 trägt unmittelbar einen Beschleunigungsaufnehmer 6, der seine Signale an einen Messumformer 7 abgibt. Der Messumformer 7 dient als elektronischer Grenzwertmelder.

Weiters ist eine zentrale Steuereinheit 8 vorgesehen, die an einen Schieber 9, der beim Schliessvorgang aktiv ist, an einen Schieber 10, der beim Öffnungsvorgang aktiv ist, und an einen Schieber 11, dessen Funktion nachfolgend beschrieben wird, angeschlossen ist.

Der Schieber 11 steuert das Ventil 12.

Funktion der Vorrichtung:

Bei der zentralen Steuereinheit 8 werden etwa durch Daumenradschalter 13 zwei Wegpositionen eingegeben, die den Formschutzüberwachungsbereich definieren. Mit der Steuereinheit ist der Messumformer 7 gekoppelt, der als Grenzwertmelder fungiert und im Falle, dass eine vorher eingegebene Minimalschranke durchbrochen wird (im Falle, dass der Beschleunigungsaufnehmer 6 ein einer plötzlichen Verzögerung entsprechendes Signal eingibt) eine Meldung an die Steuereinheit 8 abgibt. Auf Grund dieser Meldung wird der Schieber 9 aus der Schliessstellung gezogen, womit die Pumpen- und Tankleitungen zum Schliesszylinder 3 unterbrochen werden.

Um eine rasche Reaktion des Schliesssystems zu erreichen, wird direkt beim Schliesszylinder 9 der Schieber 11 mit dem vorgesteuerten Ventil 12 angeordnet, der bei Unterschreiten der in den Messumformer eingegebenen Minimalschranke auf Grund des Signals der Steuereinrichtung das Ventil 12 schliesst, und somit für eine sofortige Schliessung der Zylinderabflussleitung 14 sorgt.

Nach dem erfolgten Anhalten der Schliessbewegung des Kolbens 4 und somit des Formhälftenträgers 2 fällt der Schieber 11 wieder ab, und der Schieber 10 sorgt für die Öffnungsbewegung der Schliesseinrichtung.

**Patentansprüche**

1. Vorrichtung zum Schutz der Formen einer Spritzgiessmaschine zum Spritzgiessen von Kunststoffen während der Schliessung der Formen, mit einem feststehenden und einem beweglichen Formhälftenträger, wobei der bewegliche Formhälftenträger mit vorgegebenem Geschwindigkeitsprofil gegen die feststehende Formhälfte bewegt wird, dadurch gekennzeichnet, dass an dem beweglichen Formhälftenträger (2) oder an der Formhälfte ein Beschleunigungsaufnehmer (6) montiert ist, der an einen Messumformer (7) angeschlossen ist, der bei einer einen vorgegebenen Wert überschreitenden Verzögerung bzw. einer einen vorgegebenen Wert überschreitenden Änderung der Verzögerung ein Steuersignal an die Steuereinrichtung (8) des Schliesssystems der Spritzgiessmaschine abgibt, und die Schliessbewegung des Schliesssystems unterbricht.

2. Vorrichtung nach Anspruch 1, dadurch gekennzeichnet, dass die Steuereinheit (8) unmittelbar nach dem Abbrechen der Schliessbewegung eine Öffnungsbewegung des Schliesssystems der Spritzgiessmaschine einleitet.

3. Vorrichtung nach Anspruch 1, dadurch gekennzeichnet, dass an den beweglichen Formhälftenträger (2) ein Wegaufnehmer (5) angeschlossen ist, und dass in den Messumformer (7) bzw. in die Steuereinrichtung (8) zwei Wegpositionen der Schliesseinheit eingebbar sind, die den Überwachungsbereich für die Schliessbewegung definieren.

4. Vorrichtung nach Anspruch 1, dadurch gekennzeichnet, dass die Steuereinheit (8) über Schieber einen Schliesszylinder (3) eines Hydrauliksystems der Spritzgiessmaschine steuert, und ein Schieber (11) in Kombination mit einem Ventil (12) bei dem Abbrechen der Schliessbewegung ein sofortiges Schliessen der Abflussleitung (14) des Schliesszylinders (3) bewirkt.

## Claims

1. Device for the protection of the moulds of an injection moulding machine for the injection moulding of plastics materials during closing of the moulds, comprising a stationary and a movable support for the mould halves, the movable support for the mould halves being moved towards the stationary mould half at a pre-set speed profile, characterized in that an acceleration sensor (6) connected to a measuring transducer (7) is mounted at the movable support (2) of the mould halves or at the mould half, said measuring transducer emitting a control signal to the control means (8) of the closing system of the injection moulding machine, when a deceleration exceeding a pre-set value or a change of the deceleration occurs, and interrupting the closing motion of the closing system.

2. Device according to claim 1, characterized in that the control unit (8) initiates immediately after the interruption of the closing motion an opening motion of the closing system of the injection moulding machine.

3. Device according to claim 1, characterized in that a path sensor (5) is connected to the movable support (2) of the form halves, and that two path positions of the closing unit which define the surveillance region for the closing motion can be put in the measuring transducer (7) and in the control unit (8).

4. Device according to claim 1, characterized in that the control unit (8) controls by means of slides a closing cylinder (3) of a hydraulic system of the injection moulding machine, and that a slide (11) in combination with a valve (12) effects immediate closing of the discharge pipe (14) of the closing cylinder (3) upon interruption of the closing motion.

## Revendications

1. Dispositif pour la protection des moules d'une presse à mouler par injection de matières plastiques, pendant la fermeture de ces moules, comprenant un plateau portant un demi-moule fixe et un plateau portant un demi-moule mobile, le plateau portant ce demi-moule mobile se déplaçant avec un profil de vitesse fixé à l'avance contre le demi-moule fixe, caractérisé en ce que sur le plateau portant le demi-moule mobile (2) ou sur le demi-moule est monté un capteur d'accélération (6), raccordé à un convertisseur de mesures (7), qui, en cas de retard dépassant une valeur fixée à l'avance, délivre un signal de commande au dispositif de commande (8) du système de fermeture de la presse à injection et interrompt le mouvement de fermeture.

2. Dispositif suivant la revendication 1, caractérisé en ce que le dispositif de commande (8) engage immédiatement après l'interruption du mouvement de fermeture un mouvement d'ouverture des moules de la presse à injection.

3. Dispositif suivant la revendication 1, caractérisé en ce qu'au plateau portant le demi-moule mobile (2) est raccordé un capteur de course (5) et que dans le convertisseur de mesures (7) et/ou dans le dispositif de commande (8) sont prévues deux positions de course de l'ensemble de fermeture, qui définissent une zone de surveillance pour le mouvement de fermeture.

4. Dispositif suivant la revendication 1, caractérisé en ce que le dispositif de commande (8) provoqué par l'intermédiaire de poussoirs, un vérin de fermeture (3) d'un système hydraulique de la presse à injection et en ce que ce poussoir (11) détermine, au moment de l'interruption du mouvement de fermeture, en combinaison avec une soupape (12), la fermeture immédiate de la conduite d'évacuation (14) du vérin (3).

0 158 031

5